# DEMANDE DE BREVET EUROPEEN

(11) **EP 3 530 386 A1**
(43) Date de publication de la demande: **28.08.2019**
(21) Numéro de dépôt: 18157791.7
(22) Date de dépôt: 21.02.2018
(51) Int. Cl.: B23B 3/16

(54) **TOUR D'USINAGE À COMMANDE NUMÉRIQUE**

(71) Demandeur: Tornos SA, 2740 Moutier (CH)
(72) Inventeur: Theurillat, Marc, 2800 Delémont (CH); Theurillat, Adrien, 2800 Delémont (CH)
(74) Mandataire: BOVARD AG

(57) **Abrégé**

Un tour d'usinage à commande numérique comporte une broche (19) de tenue et d'entraînement d'une matière à usiner et au moins un équipement (15).

L'équipement (15) comprend :
- un châssis mobile (7) déplaçable selon une première direction (D1), qui est non parallèle à l'axe de rotation (Z-Z') de la broche (19),
- un actionneur (13) à même de déplacer et de positionner le châssis mobile (7) selon la première direction (D1),
- une tête de support (16), montée à pivotement sur le châssis mobile (7) de manière à pouvoir pivoter autour d'un axe de pivotement (A) sensiblement orthogonal à l'axe de rotation (Z-Z') de la broche (19), et
- un dispositif d'actionnement (17) à même de faire pivoter et de positionner angulairement la tête de support (16) autour de l'axe de pivotement (A), par rapport au châssis mobile (7).
Le châssis mobile (7) est également déplaçable selon une deuxième direction (D2) non orthogonale à l'axe de rotation (Z-Z') de la broche (19) et non parallèle à la première direction (D1). Le tour d'usinage comprend un actionneur (10) à même de déplacer et de positionner le châssis mobile (7) selon la deuxième direction (D2).

## Description

### Domaine technique de l'invention

La présente invention se rapporte au domaine des machines-outils. Plus précisément, elle concerne un tour d'usinage à commande numérique.

### État de la technique

Pour la plupart d'entre elles, les opérations d'usinage réalisées par un tour utilisent une mise en rotation de la matière à usiner par rapport à un outil, qui entame la matière passant devant lui du fait de cette mise en rotation.

Certaines formes ne peuvent pas être réalisées en procédant de la sorte. Tel est, par exemple, le cas des méplats latéraux ou des trous dont l'axe est incliné par rapport à l'axe de rotation de la broche de tenue et d'entraînement de la matière à usiner.

C'est pourquoi un tour à commande numérique peut comporter un ou plusieurs équipements additionnels grâce auxquels, alors que la pièce en cours de fabrication est encore maintenue par la broche du tour, il est possible de réaliser sur cette pièce des trous inclinés ou des méplats latéraux ne pouvant pas être obtenus par un usinage nécessitant que la matière soit entraînée en rotation. La demande de brevet européen EP 3 064 297 propose un tel équipement additionnel, qui est du type de ceux généralement appelés « axe B » du fait qu'il s'y effectue un pivotement autour d'un axe lui-même également appelé « axe B ».

Dans l'équipement proposé dans la demande de brevet européen EP 3 064 297 susmentionnée, un châssis mobile porte une tête de support à entraînement intégré, qui est pivotante autour d'un axe et qui comprend plusieurs sous-ensembles de support et d'entraînement d'outils d'usinage rotatifs tels que des fraises et des mèches de perçage. Les sous-ensembles de support et d'entraînement d'outils d'usinage sont disposés selon une rangée, laquelle est portée par deux bras de manivelle de manière à être déportée par rapport à l'axe de pivotement de la tête de support à entraînement intégré. De la sorte, moyennant un pivotement de la tête de support à entraînement intégré, les sous-ensembles de support et d'entraînement peuvent être déplacés autour de la matière à usiner portée par la broche et notamment passer devant cette matière à usiner. De plus, les outils d'usinage rotatifs portés par ces sous-ensembles de support et d'entraînement possèdent une orientation que l'on peut régler en faisant pivoter la tête de support à entraînement intégré par rapport au châssis mobile. Grâce à cela, certaines formes ayant des orientations particulières ou d'autres spécificités peuvent être réalisées.

Dans l'équipement additionnel décrit ci-dessus, parmi les outils d'usinage montés dans les sous-ensembles de support et d'entraînement, seuls ceux se trouvant du côté de l'axe de pivotement de la tête à entraînement intégré peuvent effectuer une opération sur une matière à usiner tenue par la broche du tour.

Une tourelle est un autre exemple d'équipement additionnel dont peut être pourvu un tour d'usinage. Une tourelle comporte classiquement une tête rotative ayant une circonférence circulaire. Cette tête rotative porte des outils qui se succèdent le long de sa circonférence circulaire. La demande de brevet EP 2 714 309 propose une machine-outil équipée de trois tourelles. Une tourelle est un équipement encombrant. Une tourelle est en outre un équipement lourd, qui est difficile à manoeuvrer du fait de son inertie. C'est pourquoi une tourelle n'est pas comparable à un axe B dans lequel les sous-ensembles de support et d'entraînement d'outils d'usinage sont disposés selon une rangée rectiligne.

Par ailleurs, lorsqu'un outil rotatif effectue un usinage sur une matière à usiner tenue par une broche du tour, il est connu de faire effectuer en même temps à cet outil rotatif un mouvement complexe par rapport à la matière à usiner. Au sens où on l'entend ici, un mouvement complexe est la combinaison de plusieurs mouvements simples, dont chacun s'effectue selon un axe de translation ou autour d'un axe, sous l'action d'un seul actionneur. L'opération consistant à combiner plusieurs mouvements simples et, pour se faire, à coordonner les pilotages simultanés de plusieurs actionneurs est communément appelé une interpolation dans le domaine des machines-outils.

### Exposé sommaire de l'invention

L'invention a au moins pour but de permettre qu'un tour offre plus de possibilités d'usinages pilotés par la commande numérique de ce tour.

Selon l'invention, ce but est atteint grâce à un tour d'usinage à commande numérique comportant un bâti fixe, une broche de tenue et d'entraînement d'une matière à usiner et au moins un équipement. La broche est rotative sur un axe de rotation. L'équipement comprend un châssis mobile déplaçable selon une première direction, non parallèle à l'axe de rotation de la broche, un actionneur à même de déplacer et de positionner le châssis mobile selon la première direction, une tête de support montée à pivotement sur le châssis mobile de manière à pouvoir pivoter autour d'un axe de pivotement sensiblement orthogonal à l'axe de rotation de la broche, ainsi qu'un dispositif d'actionnement à même de faire pivoter et de positionner angulairement la tête de support autour de l'axe de pivotement, par rapport au châssis mobile. La tête de support comprend plusieurs sous-ensembles de support et d'entraînement d'outils d'usinage d'une matière à usiner tenue par la broche, ces sous-ensembles de support et d'entraînement se succédant dans au moins une rangée sensiblement parallèle à l'axe de pivotement de la tête de support. Le châssis mobile est également déplaçable selon une deuxième direction non orthogonale à l'axe de rotation de la broche et non parallèle à la première direction. Le tour d'usinage selon l'invention comprend en outre un actionneur à même de déplacer et de positionner le châssis mobile selon la deuxième direction.

Dans le tour selon l'invention, les sous-ensembles de support et d'entraînement destinés à être équipés d'outils d'usinage peuvent être déplacés autour de la matière à usiner grâce à un déplacement du châssis mobile selon la première direction et selon la deuxième direction.

Toujours dans le tour selon l'invention, il est possible de prévoir que la tête de support soit à même d'être pivotée de plus de 180° autour de l'axe de pivotement sans venir buter contre un élément tel qu'un carter à travers lequel passe la broche, ce qui offre plusieurs possibilités nouvelles.

Par exemple, moyennant un pivotement de 180° de la tête de support, il peut être remédié à la situation dans laquelle la tête de support se trouve entre un outil monté sur cette tête de support et la matière à usiner tenue par la broche.

Avec l'équipement proposé dans la demande de brevet européen EP 3 064 297, des opérations d'usinage ne peuvent être réalisées qu'après que la matière à usiner a été transférée à une contre-broche afin que cette matière à usiner puisse être vue depuis l'arrière depuis la tête de support. Avec le tour selon l'invention, grâce aux possibilités étendues d'orienter angulairement la tête de support, certaines de ces opérations d'usinage peuvent être réalisées alors que la matière à usiner est toujours portée par la broche. Cela constitue un autre exemple des possibilités nouvelles offertes par l'invention.

Un avantage de l'invention est que les nouvelles possibilités mentionnées ci-dessus peuvent être obtenues sans augmenter l'encombrement du tour d'usinage selon la direction parallèle à l'axe de rotation de la broche.

Le tour d'usinage défini ci-dessus peut incorporer une ou plusieurs autres caractéristiques avantageuses, isolément ou en combinaison, en particulier parmi celles définies ci-après.

Avantageusement, la tête de support est à même de pivoter d'un angle supérieur à 180°, autour de l'axe de pivotement, par rapport au châssis mobile.

Avantageusement, la tête de support est à même de pivoter au moins de 360° autour de l'axe de pivotement, par rapport au châssis mobile.

Avantageusement, le tour d'usinage comprend une unité de pilotage à même de piloter un mouvement complexe programmable de la tête de support en coordonnant au moins deux mouvements simultanés choisis parmi une rotation de la tête de support autour de l'axe de pivotement, une translation du châssis mobile selon la première direction et une translation du châssis mobile selon la deuxième direction.

Avantageusement, le tour d'usinage comprend une unité de pilotage à même de piloter un mouvement complexe programmable de la tête de support en coordonnant deux mouvements simultanés qui sont une rotation de la tête de support autour de l'axe de pivotement et une translation du châssis mobile selon l'une au moins des première et deuxième directions.

Avantageusement, le tour d'usinage comprend une unité de pilotage à même de piloter un mouvement complexe programmable de la tête de support en coordonnant deux mouvements simultanés qui sont une translation du châssis mobile selon la première direction et une translation du châssis mobile selon la deuxième direction.

Avantageusement, le tour d'usinage comprend une unité de pilotage à même de piloter un mouvement complexe programmable de la tête de support en coordonnant trois mouvements simultanés qui sont une rotation de la tête de support autour de l'axe de pivotement, une translation du châssis mobile selon la première direction et une translation du châssis mobile selon la deuxième direction.

Avantageusement, le tour d'usinage comprend une contre-broche de tenue et d'entraînement en rotation de la matière à usiner, la broche et la contre-broche étant l'une ou chacune déplaçable en rapprochement-éloignement par rapport à l'autre de manière à pouvoir se placer dans une position dans laquelle la contre-broche peut saisir une matière à usiner tenue par la broche.

Avantageusement, la tête de support est déplaçable jusque dans une position dans laquelle un outil d'usinage porté par l'un des sous-ensembles de support et d'entraînement est à même d'usiner une matière à usiner portée par la contre-broche.

Avantageusement, l'unité de pilotage est à même de piloter le mouvement complexe programmable de la tête de support aussi bien dans le cas où ce mouvement complexe s'effectue pendant qu'un outil d'usinage porté par l'un des sous-ensembles de support et d'entraînement usine une matière à usiner portée par la broche, que dans le cas où le mouvement complexe s'effectue pendant qu'un outil d'usinage porté par l'un des sous-ensembles de support et d'entraînement usine une matière à usiner portée par la contre-broche.

Avantageusement, l'axe de pivotement de la tête de support est non parallèle aux première et deuxième directions.

Avantageusement, le châssis mobile est également déplaçable selon une troisième direction non parallèle aux première et deuxième directions, le tour d'usinage comprenant un actionneur à même de déplacer et de positionner le châssis mobile selon la troisième direction.

Avantageusement, l'axe de pivotement de la tête de support passe dans la rangée de sous-ensembles de support et d'entraînement.

Avantageusement, l'axe de pivotement de la tête de support est sensiblement horizontal.

Avantageusement, l'un au moins des sous-ensembles de support et d'entraînement est un sous-ensemble de support et d'entraînement de deux outils d'usinage en rotation et comporte une partie rotative ayant deux extrémités opposées dont chacune est pourvue d'un dispositif de tenue d'un outil d'usinage.

Avantageusement, la tête de support comporte une première et une deuxième extrémité entre lesquelles se trouve la rangée de sous-ensembles de support et d'entraînement, la première extrémité de la tête de support étant tenue par au moins un palier fixé au châssis mobile, la deuxième extrémité étant une extrémité libre qui est décalée de la première extrémité selon l'axe de pivotement.

Avantageusement, la première direction est sensiblement orthogonale à l'axe de rotation de la broche et/ou la deuxième direction est sensiblement parallèle à l'axe de rotation de la broche.

### Brève description des dessins

D'autres avantages et caractéristiques ressortiront plus clairement de la description qui va suivre d'un mode particulier de réalisation de l'invention donné à titre d'exemple non limitatif et représenté aux dessins annexés, parmi lesquels :
- la figure 1 est une vue schématique qui représente un tour d'usinage à commande numérique selon un mode de réalisation de l'invention et sur laquelle certains constituants de ce tour d'usinage sont omis dans un souci de clarté ;
- la figure 2 est une vue en perspective sur laquelle seuls une broche, une contre-broche et un équipement du tour d'usinage à commande numérique de la figure 1 sont représentés ;
- la figure 3 est une vue en perspective qui représente les mêmes constituants que la figure 2 alors qu'une première opération d'usinage s'effectue sur une matière à usiner tenue par la broche ;
- la figure 4 est une vue en perspective qui représente les mêmes constituants que la figure 2 alors qu'une deuxième opération d'usinage s'effectue sur la matière à usiner tenue par la broche ;
- la figure 5 est une vue en perspective qui représente les mêmes constituants que la figure 2 alors que la matière à usiner a été transférée de la broche à la contre-broche et qu'une troisième opération d'usinage s'effectue sur la matière à usiner tenue par cette contre-broche.

### Description d'un mode préférentiel de l'invention

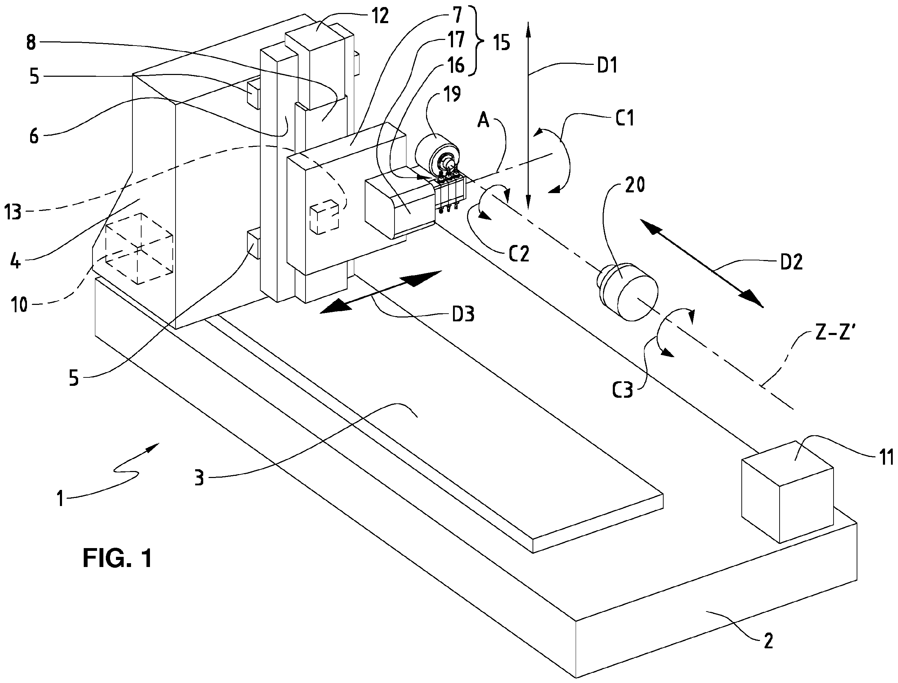

Un tour d'usinage à commande numérique 1 selon un mode de réalisation de l'invention est représenté schématiquement sur la figure 1, où plusieurs de ses constituants ne figurent pas dans un souci de clarté.

Symbolisé par un parallélogramme, un bâti fixe 2 du tour d'usinage 1 porte plusieurs éléments ainsi maintenus assemblés, dont un rail 3 de guidage d'un premier chariot 4. Par l'intermédiaire de deux rails de guidage 5, ce premier chariot 4 porte un deuxième chariot 6, qui porte à son tour un châssis mobile 7, par l'intermédiaire d'un rail de guidage 8.

Le rail de guidage 8 réalise un guidage du châssis mobile 7 selon une première direction D1. Le rail de guidage 3 réalise un guidage du premier chariot 4 selon une deuxième direction D2. Les rails de guidage 5 réalisent un guidage du deuxième chariot 6 selon une troisième direction D3. Les première, deuxième et troisième directions sont non parallèles entre elles. En particulier, ces première, deuxième et troisième directions peuvent être sensiblement orthogonales entre elles.

Un actionneur 10 piloté par une unité 11 de pilotage du fonctionnement du tour d'usinage 1 est à même de déplacer et de positionner le premier chariot 4 selon la deuxième direction D2, qui est sensiblement horizontale dans l'exemple représenté. Un actionneur 12 piloté par l'unité de pilotage 11 est à même de déplacer et de positionner le deuxième chariot 6 selon la troisième direction D3, qui est sensiblement horizontale dans l'exemple représenté. Un actionneur 13 piloté par l'unité de pilotage 11 est à même de déplacer et de positionner le châssis mobile 7 selon la première direction D1, qui est sensiblement verticale dans l'exemple représenté.

Un équipement 15 du tour d'usinage 1 comprend une tête de support 16, que porte le châssis mobile 7 et qui est montée à pivotement sur ce châssis mobile 7 de manière à pouvoir pivoter autour d'un axe de pivotement A. Un dispositif d'actionnement 17 est à même de faire pivoter et de positionner angulairement la tête de support 16 autour de son axe de pivotement A, par rapport au châssis mobile 7, ce que symbolise la double flèche C1. Dans l'exemple représenté, l'axe A est sensiblement horizontal, ce qui est avantageux sans être obligatoire.

Le tour d'usinage 1 comporte une broche 19 et une contre-broche 20, dont chacune est rotative autour d'un axe de rotation Z-Z', ce que symbolisent les doubles flèches C2 et C3. Dans l'exemple représenté, l'axe de rotation Z-Z' de la broche 19 est également celui de la contre-broche 20. Il pourrait toutefois en être autrement. L'axe de pivotement A est orthogonal à l'axe de rotation Z-Z'. Dans l'exemple représenté, la deuxième direction D2 est sensiblement parallèle à l'axe de rotation Z-Z', ce qui pourrait ne pas être le cas.

Des moyens d'entraînement connus en soi et non représentés sont à même d'entraîner la broche 19 en rotation sur l'axe X-X'. De la sorte, la broche 19 est à même d'entraîner en rotation une matière à usiner qu'elle tient. Des moyens d'entraînement connus en soi et non représentés sont à même d'entraîner la contre-broche en rotation sur l'axe Z-Z'. De la sorte, la contre-broche est à même d'entraîner en rotation une matière à usiner qu'elle tient.

Un dispositif de positionnement connu en soi et non représenté est à même de déplacer et de positionner la broche 19 selon une direction parallèle à l'axe de rotation Z-Z'. Le tour d'usinage à commande numérique 1 comporte un canon qui guide la broche 19 selon la direction parallèle à l'axe de rotation Z-Z'. Dans un souci de clarté, ce canon n'est pas représenté sur les figures annexées.

Un autre dispositif de positionnement connu en soi et non représenté est à même de déplacer et de positionner la contre-broche 20 selon une direction parallèle à l'axe de rotation Z-Z'.

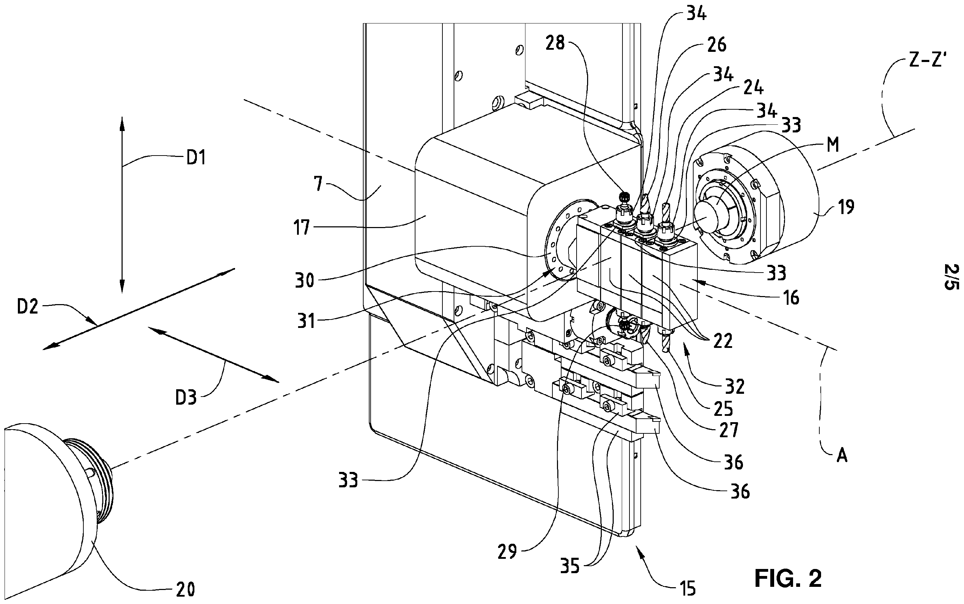

Ainsi qu'on peut le voir à la figure 2, la tête de support 16 comporte plusieurs sous-ensembles 22 de support et d'entraînement en rotation d'outils d'usinage 24, 25, 26, 27, 28 et 29 qui, par exemple, peuvent être des mèches de perçage et/ou des fraises. Au nombre de trois dans l'exemple représenté, les sous-ensembles de support et d'entraînement 22 sont avantageusement identiques entre eux et ils sont disposés dans une rangée sensiblement rectiligne, qui est parallèle à l'axe de pivotement A. De préférence, cet axe de pivotement A passe dans la rangée de sous-ensemble de support et d'entraînement 22, ce qui est le cas dans l'exemple représenté.

La tête de support 16 comporte deux extrémités opposées, à savoir une première extrémité 31 et une deuxième extrémité 32, qui sont décalées l'une de l'autre selon l'axe de pivotement A. La première extrémité 31 de la tête de support 16 est tenue par deux paliers 30 qui font partie du châssis mobile 7 et dont un seul est visible à la figure 2. La deuxième extrémité 32 de la tête de support 16 est une extrémité libre, ce qui est avantageux sans être obligatoire.

Chaque sous-ensemble de support et d'entraînement 22 comporte une partie rotative 33 ayant deux extrémités dont chacune est pourvue d'un dispositif 34 de tenue d'un outil d'usinage tel que l'un des outils d'usinage 24 à 29.

Comme ceci est le cas dans l'exemple représenté, l'équipement 15 peut comporter un ou plusieurs supports 35 d'outils d'usinage 36 fixes par rapport au châssis mobile 7. Ces outils d'usinage 36 sont prévus pour être fixes lorsqu'ils sont employés et usinent une matière à usiner entraînée en rotation par la broche 19 ou la contre-broche 20.

Le dispositif d'actionnement 17 est à même de faire pivoter la tête de support 16 d'un angle supérieur à 360° autour de l'axe de pivotement A.

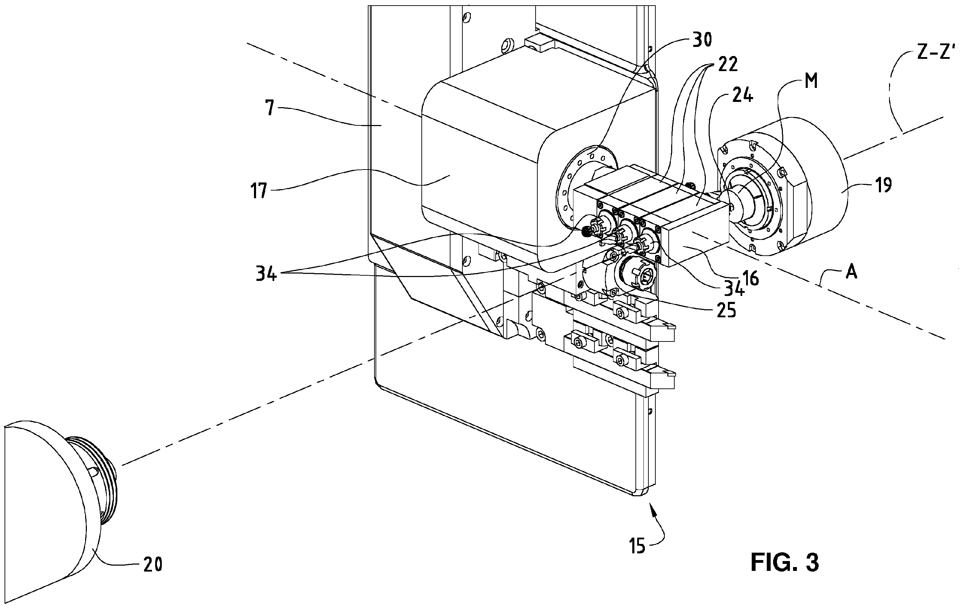

Sur la figure 3, la broche 19 tient une matière à usiner M, qu'elle immobilise pendant que l'outil d'usinage 24 entraîné en rotation par la partie rotative 33 de l'un des sous-ensembles de support et d'entraînement 22 effectue un usinage, par exemple pour réaliser un trou, dans cette matière à usiner M.

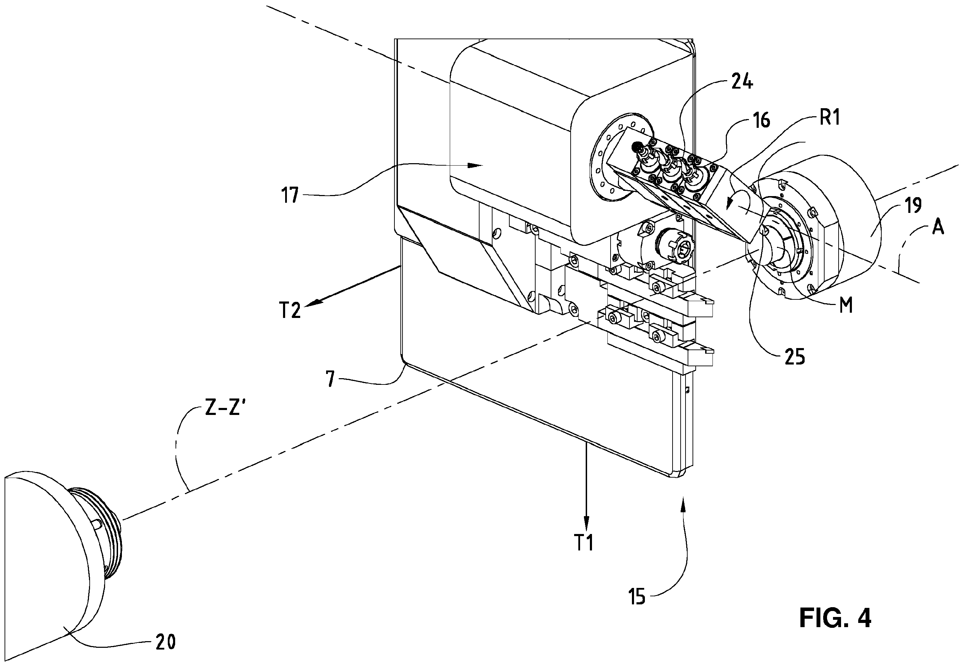

Sur la figure 4, la tête de support 16 a été pratiquement retournée, c'est-à-dire pivotée de presque un demi-tour autour de son axe de pivotement A, de manière que l'outil d'usinage effectuant une opération d'usinage sur la matière à usiner M immobilisée par la broche 19 est l'outil d'usinage 25 monté sur la même partie rotative 33 que l'outil d'usinage 24, mais à l'opposé de cet outil d'usinage 24, qui usinait la matière à usiner M sur la figure 3. L'opération d'usinage en cours sur la figure 4 est, par exemple, la réalisation d'une fente dans l'extrémité de la matière à usiner M. L'unité de pilotage 11 pilote un mouvement complexe programmable au moyen duquel est réalisée cette opération d'usinage par l'outil d'usinage 25 tournant sur lui-même. Ce mouvement complexe est la combinaison de trois mouvements que l'unité de pilotage 11 fait faire simultanément à la tête de support 16 et qui sont une rotation R1 de la tête de support 16 autour de l'axe de pivotement A, un mouvement de translation T1 de la tête de support 16 parallèlement à la première direction D1 et un mouvement de translation T2 de la tête de support 16 parallèlement à la deuxième direction D2. Le mouvement de translation T1 est le résultat d'un coulissement du châssis mobile 7 le long de la glissière 8, tandis que le mouvement de translation T2 est le résultat d'un coulissement du premier chariot 4 le long de la glissière 3.

Il ressort de ce qui précède que, bien que les sous-ensembles de support et d'entraînement 22 soient au nombre de trois dans l'équipement 15, les six outils portés par ces trois sous-ensembles de support et d'entraînement 22 peuvent tous être employés pour effectuer une opération d'usinage sur la matière à usiner M lorsque cette matière à usiner M est tenue par la broche 19.

De plus, comme la tête de support 16 peut effectuer des mouvements complexes programmables, de très nombreuses formes peuvent être effectuées au moyen des outils 24 à 29 qui équipent cette tête de support 16. Par exemple, ces formes peuvent être des trous inclinés par rapport à l'axe de rotation Z-Z', des méplats, des fentes, etc. On notera en outre que la tête de support 16 peut effectuer toutes les opérations mentionnées ci-dessus, tout en se déplaçant dans un espace d'usinage dont la dimension selon la direction parallèle à l'axe de rotation Z-Z' est petite. Grâce à cela, la distance maximale entre la broche 19 et la contre-broche 20 peut également être petite. Lorsque tel est le cas, un faible encombrement est obtenu.

La broche 19 et la contre-broche 20 peuvent être rapprochées l'une de l'autre jusqu'à ce que la contre-broche 20 soit à même de saisir la matière à usiner M tenue par la broche 19. De la sorte, la matière à usiner M peut être transférée de la broche 19 à la contre-broche 20.

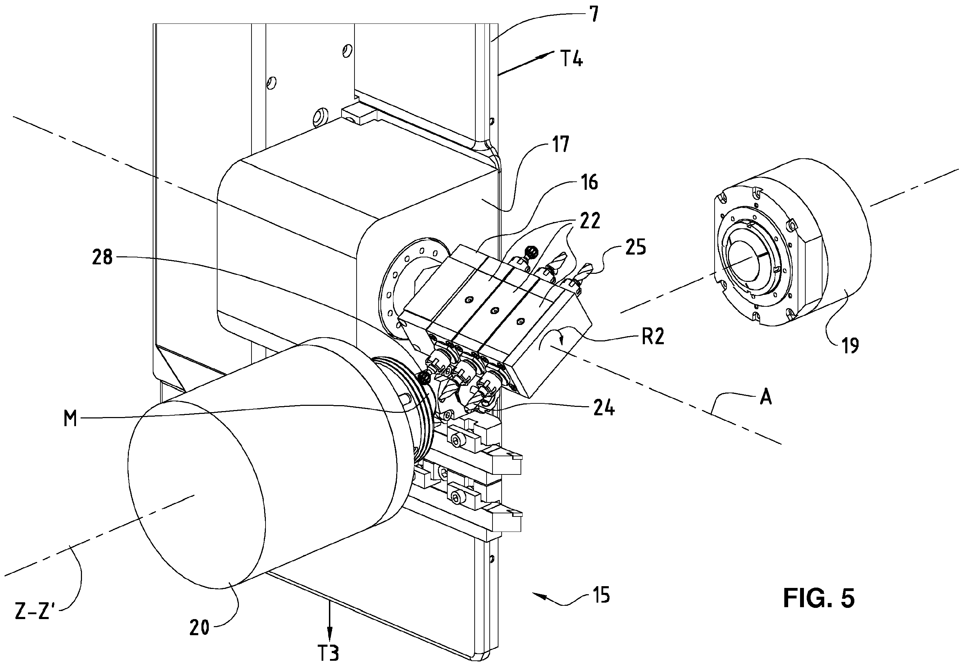

Sur la figure 5, la matière à usiner M a été transférée à la contre-broche 20, qui la tient immobilisée. L'outil d'usinage 28 réalise une opération d'usinage sur la matière à usiner M tenue et immobilisée par la contre-broche 20. Lors de cette opération d'usinage, la tête de support 16 effectue un mouvement programmable complexe qui est constitué d'une rotation R2, d'un mouvement de translation T3 et d'un mouvement de translation T4 de la tête de support 16.

Le mouvement complexe programmable de la tête de support 16 lors d'une opération d'usinage sur la matière à usiner M tenue par la contre-broche 20 est pilotée et obtenue de la même manière que le mouvement complexe programmable de la tête de support 16 lors d'un usinage sur la matière à usiner M tenue par la broche 19.

Lors d'un usinage de la matière à usiner M à l'aide de l'un des outils 24 à 29, la broche 19 ou la contre-broche 20 tenant cette matière à usiner M peut être entraînée dans un mouvement normalement lent de pivotement autour de l'axe de rotation Z-Z' et/ou dans un mouvement normalement lent de translation parallèlement à cet axe de rotation Z-Z'.

Qu'il le soit lorsque l'usinage à l'aide d'un des outils 24 à 29 s'effectue sur la matière à usiner M tenue par la broche 19 ou lorsque l'usinage à l'aide d'un des outils d'usinage 24 à 29 s'effectue sur la matière à usiner M tenue par la contre-broche 20, le mouvement complexe programmable de la tête de support 16 peut n'être constitué que de deux mouvements, qui peuvent être un mouvement de translation parallèlement à la première direction D1 et un mouvement de translation par rapport à la deuxième direction D2, qui peuvent aussi être un mouvement de pivotement autour de l'axe de pivotement A et un mouvement de translation parallèlement à la première direction D1 ou qui peuvent encore être un mouvement de pivotement autour de l'axe de pivotement A et un mouvement de translation parallèlement à la deuxième direction D2. Lors du mouvement complexe programmable, le mouvement de translation de la tête de support 16 parallèlement à la deuxième direction D2 peut être remplacé par un mouvement de la broche 19 ou de la contre-broche 20 parallèlement à cette même deuxième direction D2.

L'invention ne se limite pas au mode de réalisation décrit plus haut. En particulier, la broche 19 pourrait être fixe et il pourrait ne pas y avoir de canon.

## Revendications

1. Tour d'usinage à commande numérique, comportant un bâti fixe (2), une broche (19) de tenue et d'entraînement d'une matière à usiner (M) et au moins un équipement (15), la broche (19) étant rotative sur un axe de rotation (Z-Z'), l'équipement (15) comprenant :
- un châssis mobile (7) déplaçable selon une première direction (D1), qui est non parallèle à l'axe de rotation (Z-Z') de la broche (19),
- un actionneur (13) à même de déplacer et de positionner le châssis mobile (7) selon la première direction (D1),
- une tête de support (16), montée à pivotement sur le châssis mobile (7) de manière à pouvoir pivoter autour d'un axe de pivotement (A) sensiblement orthogonal à l'axe de rotation (Z-Z') de la broche (19), et
- un dispositif d'actionnement (17) à même de faire pivoter et de positionner angulairement la tête de support (16) autour de l'axe de pivotement (A), par rapport au châssis mobile (7),
la tête de support (16) comprenant plusieurs sous-ensembles (22) de support et d'entraînement d'outils (24 à 29) d'usinage d'une matière à usiner (M) tenue par la broche (19), ces sous-ensembles de support et d'entraînement (22) se succédant dans au moins une rangée sensiblement parallèle à l'axe de pivotement (A) de la tête de support (16),
**caractérisé en ce que** le châssis mobile (7) est également déplaçable selon une deuxième direction (D2) non orthogonale à l'axe de rotation (Z-Z') de la broche (19) et non parallèle à la première direction (D1), le tour d'usinage comprenant un actionneur (10) à même de déplacer et de positionner le châssis mobile (7) selon la deuxième direction (D2).

2. Tour d'usinage selon la revendication 1, **caractérisé en ce que** la tête de support (16) est à même de pivoter d'un angle supérieur à 180°, autour de l'axe de pivotement (A), par rapport au châssis mobile (7).

3. Tour d'usinage selon l'une quelconque des revendications 1 et 2, **caractérisé en ce que** la tête de support (16) est à même de pivoter au moins de 360° autour de l'axe de pivotement (A), par rapport au châssis mobile (7).

4. Tour d'usinage selon l'une quelconque des revendications précédentes, **caractérisé en ce qu'**il comprend une unité de pilotage (11) à même de piloter un mouvement complexe programmable de la tête de support (16) en coordonnant au moins deux mouvements simultanés choisis parmi une rotation (R1, R2) de la tête de support (16) autour de l'axe de pivotement (A), une translation (T1, T3) du châssis mobile (7) selon la première direction (D1) et une translation (T2, T4) du châssis mobile (7) selon la deuxième direction (D2).

5. Tour d'usinage selon l'une quelconque des revendications précédentes, **caractérisé en ce qu'**il comprend une unité de pilotage (11) à même de piloter un mouvement complexe programmable de la tête de support (16) en coordonnant trois mouvements simultanés qui sont une rotation (R1, R2) de la tête de support (16) autour de l'axe de pivotement (A), une translation (T1, T3) du châssis mobile (7) selon la première direction (D1) et une translation (T2, T4) du châssis mobile (7) selon la deuxième direction (D2).

6. Tour d'usinage selon l'une quelconque des revendications précédentes, **caractérisé en ce qu'**il comprend une contre-broche (20) de tenue et d'entraînement en rotation de la matière à usiner (M), la broche (19) et la contre-broche (20) étant l'une ou chacune déplaçable en rapprochement-éloignement par rapport à l'autre de manière à pouvoir se placer dans une position dans laquelle la contre-broche (20) peut saisir une matière à usiner (M) tenue par la broche (19).

7. Tour d'usinage selon la revendication 6, **caractérisé en ce que** la tête de support (16) est déplaçable jusque dans une position dans laquelle un outil d'usinage porté par l'un des sous-ensembles de support et d'entraînement (22) est à même d'usiner une matière à usiner (M) portée par la contre-broche (20).

8. Tour d'usinage selon la revendication 6 et l'une quelconque des revendications 4 et 5, **caractérisé en ce que** l'unité de pilotage (11) est à même de piloter le mouvement complexe programmable de la tête de support (16) aussi bien dans le cas où ce mouvement complexe s'effectue pendant qu'un outil d'usinage porté par l'un des sous-ensembles de support et d'entraînement (22) usine une matière à usiner (M) portée par la broche (19), que dans le cas où le mouvement complexe s'effectue pendant qu'un outil d'usinage porté par l'un des sous-ensembles de support et d'entraînement (22) usine une matière à usiner (M) portée par la contre-broche (20).

9. Tour d'usinage selon l'une quelconque des revendications précédentes, **caractérisé en ce que** l'axe de pivotement (A) de la tête de support (16) est non parallèle aux première et deuxième directions (D1, D2).

10. Tour selon l'une quelconque des revendications précédentes, **caractérisé en ce que** le châssis mobile (7) est également déplaçable selon une troisième direction (D3) non parallèle aux première et deuxième directions (D1, D2), le tour d'usinage comprenant un actionneur (12) à même de déplacer et de positionner le châssis mobile (7) selon la troisième direction (D3).

11. Tour d'usinage selon l'une quelconque des revendications précédentes, **caractérisé en ce que** l'axe de pivotement (A) de la tête de support (16) passe dans la rangée de sous-ensembles de support et d'entraînement (22).

12. Tour d'usinage selon l'une quelconque des revendications précédentes, **caractérisé en ce que** l'axe de pivotement (A) de la tête de support (16) est sensiblement horizontal.

13. Tour d'usinage selon l'une quelconque des revendications précédentes, **caractérisé en ce que** l'un au moins des sous-ensembles de support et d'entraînement (22) est un sous-ensemble (22) de support et d'entraînement de deux outils d'usinage en rotation et comporte une partie rotative (33) ayant deux extrémités opposées dont chacune est pourvue d'un dispositif (34) de tenue d'un outil d'usinage.

14. Tour d'usinage selon l'une quelconque des revendications précédentes, **caractérisé en ce que** la tête de support (16) comporte une première (31) et une deuxième extrémité (32) entre lesquelles se trouve la rangée de sous-ensembles de support et d'entraînement (22), la première extrémité (31) de la tête de support (16) étant tenue par au moins un palier (30) fixé au châssis mobile (7), la deuxième extrémité (32) étant une extrémité libre qui est décalée de la première extrémité (31) selon l'axe de pivotement (A).

15. Tour d'usinage selon l'une quelconque des revendications précédentes, **caractérisé en ce que** la première direction (D1) est sensiblement orthogonale à l'axe de rotation (Z-Z') de la broche (19) et/ou la deuxième direction (D2) est sensiblement parallèle à l'axe de rotation (Z-Z') de la broche (19).
